# EUROPEAN PATENT SPECIFICATION

(11) **EP 3 118 248 B1**
(45) Date of publication and mention of the grant of the patent: **13.02.2019**
(21) Application number: 14885759.2
(22) Date of filing: 12.03.2014
(51) Int. Cl.: C08K 5/51, C08L 23/00, C08L 101/00

(54) **PROCESSING STABILIZER**
VERARBEITUNGSSTABILISATOR
AGENT STABILISANT POUR TRAITEMENT

(43) Date of publication of application: 18.01.2017
(73) Proprietor: Sumitomo Chemical Company Limited, Tokyo 104-8260 (JP)
(72) Inventor: KIMURA, Natsuko, Osaka-shi Osaka 554-8558 (JP)
(74) Representative: Vossius & Partner Patentanwälte Rechtsanwälte mbB
(86) International application number: PCT/JP2014/057427
(87) International publication number: WO 2015/136717

(56) References cited:
- JP-A- S5 495 588
- JP-A- H02 231 497
- JP-A- H10 273 494
- JP-A- 2012 520 365
- US-A- 4 433 087
- US-A1- 2009 247 675

## Description

### Technical Field

The present invention relates to a processing stabilizer.

### Background Art

Compounds represented by formula (I) are known as processing stabilizers for thermoplastic polymers such as polyolefins (for example, Patent Document 1). Since resins such as thermoplastic polymers sometimes form foreign substances leading to product defects such as gels, a better processing stabilizer was required. 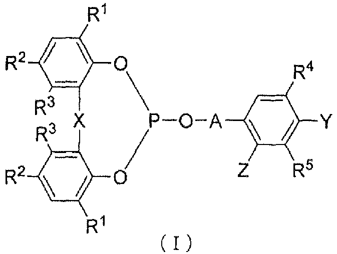 In formula (I), R¹, R², R⁴ and R⁵ each independently represent a hydrogen atom, an alkyl group having 1 to 8 carbon atoms, a cycloalkyl group having 5 to 8 carbon atoms, an alkylcycloalkyl group having 6 to 12 carbon atoms, an aralkyl group having 7 to 12 carbon atoms or a phenyl group, R³ represents a hydrogen atom or an alkyl group having 1 to 8 carbon atoms. X represents a single bond, a sulfur atom or a >CH-R⁶ group (R⁶ represents a hydrogen atom, an alkyl group having 1 to 8 carbon atoms or a cycloalkyl group having 5 to 8 carbon atoms). A represents an alkylene group having 1 to 8 carbon atoms or a *-C(=O)-R⁷- group (R⁷ represents a single bond or an alkylene group having 1 to 8 carbon atoms, and * represents a bond on the side of oxygen). One of Y and Z represents a hydroxyl group, an alkoxy group having 1 to 8 carbon atoms or an aralkyloxy group having 7 to 12 carbon atoms, and the other represents a hydrogen atom or an alkyl group having 1 to 8 carbon atoms.

### [Prior Art Documents]

### [Patent Document]

[Patent Document 1] JP 10-273494 A

### Summary of the Invention

### Problem to be Solved by the Invention

Conventional processing stabilizers were not sufficient in improving processing stability of resins.

### Means for Solving the Problem

The present invention includes the following inventions:
[1] A processing stabilizer comprising a compound represented by formula (I): 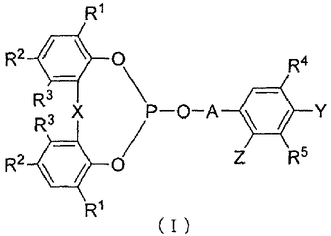 wherein R¹, R², R⁴ and R⁵ each independently represent a hydrogen atom, an alkyl group having 1 to 8 carbon atoms, a cycloalkyl group having 5 to 8 carbon atoms, an alkylcycloalkyl group having 6 to 12 carbon atoms, an aralkyl group having 7 to 12 carbon atoms or a phenyl group; R³ represents a hydrogen atom or an alkyl group having 1 to 8 carbon atoms; X represents a single bond, a sulfur atom or a >CH-R⁶ group (R⁶ represents a hydrogen atom, an alkyl group having 1 to 8 carbon atoms or a cycloalkyl group having 5 to 8 carbon atoms); A represents an alkylene group having 1 to 8 carbon atoms or a *-C(=O)-R⁷- group (R⁷ represents a single bond or an alkylene group having 1 to 8 carbon atoms, and * represents a bond on the side of oxygen); one of Y and Z represents a hydroxyl group, an alkoxy group having 1 to 8 carbon atoms or an aralkyloxy group having 7 to 12 carbon atoms, and the other represents a hydrogen atom or an alkyl group having 1 to 8 carbon atoms,
   and a compound represented by formula (II): 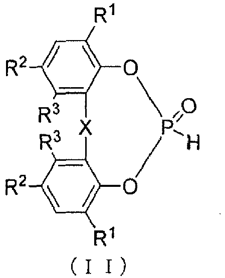
   wherein R¹ and R² each independently represent a hydrogen atom, an alkyl group having 1 to 8 carbon atoms, a cycloalkyl group having 5 to 8 carbon atoms, an alkylcycloalkyl group having 6 to 12 carbon atoms, an aralkyl group having 7 to 12 carbon atoms or a phenyl group; R³ represents a hydrogen atom or an alkyl group having 1 to 8 carbon atoms; X represents a single bond, a sulfur atom or a >CH-R⁶ group (R⁶ represents a hydrogen atom, an alkyl group having one 1 to 8 atoms or a cycloalkyl group having 5 to 8 carbon atoms),
   wherein the content of the compound represented by formula (II) is 0.005 to 10 parts by mass with respect to 100 parts by mass of the compound represented by formula (I).
[2] A processing stabilizer comprising a compound represented by formula (I): 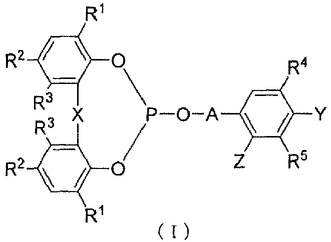 wherein R¹, R², R⁴ and R⁵ each independently represent a hydrogen atom, an alkyl group having 1 to 8 carbon atoms, a cycloalkyl group having 5 to 8 carbon atoms, an alkylcycloalkyl group having 6 to 12 carbon atoms, an aralkyl group having 7 to 12 carbon atoms or a phenyl group; R³ represents a hydrogen atom or an alkyl group having 1 to 8 carbon atoms; X represents a single bond, a sulfur atom or a >CH-R⁶ group (R⁶ represents a hydrogen atom, an alkyl group having 1 to 8 carbon atoms or a cycloalkyl group having 5 to 8 carbon atoms); A represents an alkylene group having 1 to 8 carbon atoms or a *-C(=O)-R⁷- group (R⁷ represents a single bond or an alkylene group having 1 to 8 carbon atoms, and * represents a bond on the side of oxygen); one of Y and Z represents a hydroxyl group, an alkoxy group having 1 to 8 carbon atoms or an aralkyloxy group having 7 to 12 carbon atoms, and the other represents a hydrogen atom or an alkyl group having 1 to 8 carbon atoms,
   and a compound represented by formula (II): 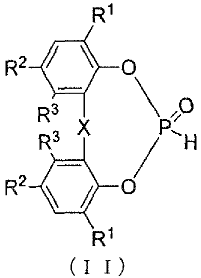 wherein R¹ and R² each independently represent a hydrogen atom, an alkyl group having 1 to 8 carbon atoms, a cycloalkyl group having 5 to 8 carbon atoms, an alkylcycloalkyl group having 6 to 12 carbon atoms, an aralkyl group having 7 to 12 carbon atoms or a phenyl group; R³ represents a hydrogen atom or an alkyl group having 1 to 8 carbon atoms; X represents a single bond, a sulfur atom or a >CH-R⁶ group (R⁶ represents a hydrogen atom, an alkyl group having 1 to 8 carbon atoms or a cycloalkyl group having 5 to 8 carbon atoms), wherein the area of the compound represented by formula (II) is 0.01 to 5 given that the area of the compound represented by formula (I) is 100 in liquid chromatography measurement under the following conditions:
   Measurement conditions
   Column: Sumipax ODS A-212 (6 mm ϕ X 150 mm, diameter of filler: 5 µm)
   Column temperature: 40°C
   Mobile phase:
      (Liquid A) 0.1 mass% of ammonium acetate/water
      (Liquid B) 0.1 mass% of ammonium acetate/methanol
   Mobile phase gradient: 0→20 minutes (Liquid A: 20→0 mass% (1 mass%/minute), Liquid B: 80→100 mass% (1 mass%/minute)), 20→45 minutes (Liquid A: 0 mass%, Liquid B: 100 mass%)
   Flow rate: 1.0 mL/minute
   Detection method: UV (280 nm)
   Sample concentration: 5 mg/mL
   Injection amount: 10 µL.
[3] The processing stabilizer according to [1] or [2], wherein the total amount of the compound represented by formula (I) and the compound represented by formula (II) is 90 parts by mass or more with respect to 100 parts by mass of the processing stabilizer.
[4] A thermoplastic polymer composition comprising the processing stabilizer according to any one of [1] to [3], and a thermoplastic polymer.
[5] The thermoplastic polymer composition according to [4], wherein the content of the processing stabilizer according to any one of [1] to [3] is 0.005 to 5 parts by weight with respect to 100 parts by mass of the thermoplastic polymer.
[6] The thermoplastic polymer composition according to [4] or [5], wherein the thermoplastic polymer is a polyolefin.
[7] Use of the processing stabilizer according to any one of [1] to [3] for improving processing stability of thermoplastic polymers.

### Effect of the Invention

According to the present invention, a processing stabilizer which improves the processing stability of resins more can be provided.

### Description of Embodiments

The processing stabilizer of the present invention comprises a compound represented by formula (I) (hereinafter sometimes referred to as a compound (I)) and a compound represented by formula (II) (hereinafter sometimes referred to as a compound (II)).

Examples of the alkyl group having 1 to 8 carbon atoms include a methyl group, an ethyl group, a n-propyl group, an i-propyl group, a n-butyl group, an i-butyl group, a sec-butyl group, a t-butyl group, a t-pentyl group, an i-octyl group, a t-octyl group, and a 2-ethylhexyl group.

Examples of the cycloalkyl group having 5 to 8 carbon atoms include a cyclopentyl group, a cyclohexyl group, a cycloheptyl group, and a cyclooctyl group.

Examples of the alkylcycloalkyl group having 6 to 12 carbon atoms include a 1-methylcyclopentyl group, a 1-methycyclohexyl group, and a 1-methyl-4-i-propylcyclohexyl group.

Examples of the aralkyl group having 7 to 12 carbon atoms include a benzyl group, an a-methylbenzyl group, and an α,α-dimethylbenzyl group.

R¹, R², and R⁴ are each preferably an alkyl group having 1 to 8 carbon atoms, a cycloalkyl group having 5 to 8 carbon atoms, or an alkylcycloalkyl group having 6 to 12 carbon atoms. R¹ and R⁴ are each more preferably a t-alkyl group such as a t-butyl group, a t-pentyl group and a t-octyl group, a cyclohexyl group or a 1-methylcyclohexyl group.

R² is more preferably an alkyl group having 1 to 5 carbon atoms such as a methyl group, an ethyl group, a n-propyl group, an i-propyl group, a n-butyl group, an i-butyl group, a sec-butyl group, a t-butyl group or a t-pentyl group, and still more preferably, a methyl group, a t-butyl group or a t-pentyl group.

R⁵ is preferably a hydrogen atom, an alkyl group having 1 to 8 carbon atoms, or a cycloalkyl group having 5 to 8 carbon atoms, and more preferably a hydrogen atom, an alkyl group having 1 to 5 carbon atoms such as a methyl group, an ethyl group, a n-propyl group, an i-propyl group, a n-butyl group, an i-butyl group, a sec-butyl group, a t-butyl group or a t-pentyl group.

R³ represents a hydrogen atom or an alkyl group having 1 to 8 carbon atoms. Examples of the alkyl group having 1 to 8 carbon atoms include the same as those described above. Preferably, R³ is a hydrogen atom or an alkyl group having 1 to 5 carbon atoms, and more preferably a hydrogen atom or a methyl group.

X represents a single bond, a sulfur atom or a >CH-R⁶ group, wherein R⁶ represents a hydrogen atom, an alkyl group having 1 to 8 carbon atoms or a cycloalkyl group having 5 to 8 carbon atoms. Examples of the alkyl group having 1 to 8 carbon atoms and the cycloalkyl group having 5 to 8 carbon atoms which are represented by R⁶ include the same as those described above. X is preferably a methylene group substituted by an alkyl group having 1 to 4 carbon atoms such as a methyl group, an ethyl group, a n-propyl group, an i-propyl group, a n-butyl group, an i-butyl group or a t-butyl group, or a single bond, and more preferably a single bond.

A represents an alkylene group having 1 to 8 carbon atoms, or a *-C(=O)-R⁷ group. R⁷ represents a single bond or an alkylene group having 1 to 8 carbon atoms, and * represents a bond on the side of oxygen. Examples of the alkylene group having 1 to 8 carbon atoms include a methylene group, an ethylene group, a propylene group, a butylene group, a pentamethylene group, a hexamethylene group, an octamethylene group, and a 2,2-dimethyl-1,3-propylene group. A is preferably a propylene group. * in the *-C(=O)-R⁷ group indicates that a carbonyl group is bonded to an oxygen atom of a phosphite group. R⁷ is preferably a single bond or an ethylene group.

One of Y and Z represents a hydroxyl group, an alkoxy group having 1 to 8 carbon atoms or an aralkyloxy group having 7 to 12 carbon atoms, and the other represents a hydrogen atom or an alkyl group having 1 to 8 carbon atoms. Here, examples of the alkyl group having 1 to 8 carbon atoms include the same as those descried above. Examples of the aralkyloxy group having 7 to 12 carbon atoms include a benzyloxy group, an α-methylbenzyloxy group, and an α,α-dimethylbenzyloxy group.

Examples of the compound (I) include 2,4,8,10-tetra-t-butyl-6-[3-(3-methyl-4-hydroxy-5-t-butylphenyl)propoxy]dibenzo[d,f][1,3,2]dioxaphosphepin, 6-[3-(3,5-di-t-butyl-4-hydroxyphenyl)propoxy]-2,4,8,10-tetra-t-butyldibenzo[d,f][1,3,2]dioxaphosphepin, 6-[3-(3,5-di-t-butyl-4-hydroxyphenyl)propoxy]-4,8-di-t-butyl-2,10-dimethyl-12H-dibenzo[d,g][1,3,2]dioxaphosphocin, 6-[3-(3,5-di-t-butyl-4-hydroxyphenyl)propionyloxy]-4,8-di-t-butyl-2,10-dimethyl-12H-dibenzo[d,g][1,3,2]dioxaphosphocin. Preferably, the compound (I) is 2,4,8,10-tetra-t-butyl-6-[3-(3-methyl-4-hydroxy-5-t-butylphenyl)propoxy]dibenzo [d,f][1,3,2]dioxaphosphepin.

A commercially available product can be used for the compound (I). SUMILIZER (registered trademark) GP (manufactured by SUMITOMO CHEMICAL COMPANY, LIMITED) is given as an example of the commercially available product.

Examples of the compound (II) include 6-oxo-2,4,8,10-tetra-t-butyl-dibenzo[d,f][1,3,2]dioxaphosphepin, 6-oxo-4,8-di-t-butyl-2,10-dimethyl-dibenzo[d,g][1,3,2]dioxaphosphepin, 6-oxo-2,4,8,10-tetra-t-butyl-dibenzo[d,f][1,3,2]dioxaphosphocin, 6-oxo-4,8-di-t-butyl-2,10-dimethyl-dibenzo[d,g][1,3,2]dioxaphosphocin, 6-oxo-4,8-di-t-butyl-2,10-dimethyl-12H-dibenzo[d,g][1,3,2]dioxaphosphepin, 6-oxo-4,8-di-t-butyl-2,10-dimethyl-12H-dibenzo[d,g][1,3,2]dioxaphosphocin. Preferably, the compound (II) is 6-oxo-2,4,8,10-tetra-t-butyl-dibenzo[d,f][1,3,2]dioxaphosphepin.

The compound (II) can be produced according to the description of US Patent No. 5475042 (Examples 1, 2).

In the processing stabilizer of the present invention, the content of the compound (II) is preferably 0.005 to 5 parts by mass, more preferably 0.005 to 2 parts by mass, and further preferably 0.01 to 2 parts by mass, with respect to 100 parts by mass of the compound (I).

In liquid chromatography measurement under the following measurement conditions, the area of the compound (II) is usually 0.01 to 5, preferably 0.01 to 2, more preferably 0.01 to 1, further preferably 0.02 to 1, and particularly preferably 0.04 to 1, given that the area of the compound (I) is 100.

### <Measurement conditions>

Column: Sumipax ODS A-212 (6 mm ϕ X 150 mm, diameter of filler: 5 µm)
Column temperature: 40°C
Mobile phase:
   (Liquid A) 0.1 mass% of ammonium acetate/water
   (Liquid B) 0.1 mass% of ammonium acetate/methanol
Mobile phase gradient: 0→20 minutes (Liquid A: 20→0 mass% (1 mass%/minute), Liquid B: 80→100 mass% (1 mass%/minute)), 20→45 minutes (Liquid A: 0 mass%, Liquid B: 100 mass%)
Flow rate: 1.0 mL/minute
Detection method: UV (280 nm)
Sample concentration: 5 mg/mL
Injection amount: 10 µL

The processing stabilizer of the present invention may further contain an additive within the range in which the effect of the present invention is not inhibited. Examples of the additive include a UV absorber, a light stabilizer, an antioxidant, a metal-inactivating agent, a nucleating agent, a lubricant, an antistatic agent, a flame retardant, a filler, a pigment, a plasticizer, a flame retardant, an anti-blocking agent, a surfactant, a processing aid, a blowing agent, an emulsifier, a glazing agent, a neutralizing agent such as calcium stearate, hydrotalcite, and a binder.

The total amount of the compound (I) and the compound (II) is preferably 90 parts by weight or more, more preferably 95 parts by weight or more, further preferably 98 parts by mass or more, and particular preferably 99 parts by mass or more, with respect to 100 parts by mass of the processing stabilizer of the present invention.

The processing stabilizer of the present invention is preferably in a powdered, granular, pellet-like or flaky form.

The processing stabilizer of the present invention can be produced, for example, by mixing the compound (I) and the compound (II). A mixing method using a publicly known mixer such as a Henschel mixer, a super mixer or a high-speed mixer is given as the mixing method.

Specific examples of the mixing method include a method in which the compound (I) and the compound (II) are compressively granulated by a compression granulator such as a roller compactor to obtain a flaky processing stabilizer, a method in which the compounds (I) and (II) are melt extruded by a single or multiple screw extruder to obtain a pellet-like processing stabilizer, a method in which the compounds (I) and (II) are extruded by a semi-dry extruder such as a disk pelleter to obtain a pellet-like processing stabilizer, a method in which the compounds (I) and (II) are mixed with a binder to obtain a granular processing stabilizer, a method in which the compounds (I) and (II) are dissolved or dispersed in a solvent followed by removing the solvent under reduced pressure. Examples of the solvent include aromatic hydrocarbons having 6 to 12 carbon atoms, alcohols having 1 to 8 carbon atoms, aliphatic nitriles having 2 to 3 carbon atoms. When the additive is added to the processing stabilizer of the present invention, it may be mixed together with the compound (I) and the compound (II).

The processing stabilizer of the present invention can improve the processing stability of resins such as thermoplastic polymers.

Examples of the thermoplastic polymers include propylene-based resins; ethylene-based resins such as a polyethylene, an ethylene/α-olefin copolymer, an ethylene/ethyl acrylate copolymer resin, an ethylene/vinyl acetate copolymer resin, an ethylene/vinyl alcohol copolymer resin, and an ethylene/methyl methacrylate copolymer; methylpentene polymers; styrene-based resins such as a poly(p-methylstyrene), a poly (α-methylstyrene), an acrylonitrile/styrene copolymer resin, an acrylonitrile/butadiene/styrene copolymer resin, a special acrylic rubber/acrylonitrile/styrene copolymer resin, an acrylonitrile/chlorinated polyethylene/styrene copolymer resin, and a styrene/butadiene copolymer; halogenated polyolefins such as a chlorinated polyethylene, a polychloroprene, a chlorinated rubber, a polyvinyl chloride and a polyvinylidene chloride; acrylic resins such as an acrylic resin and a methacrylic resin; fluorine resins; polyacetals; grafted polyphenylene ether resins; polyphenylene sulfide resins; polyamides; polyester resins such as a polyethylene terephthalate and a polybutylene terephthalate; polycarbonates; polysulfones; polyetheretherketones; polyethersulfones; aromatic polyester resins; diallylphthalate prepolymers; silicone resins; and elastomers such as a 1,2-polybutadiene, a polyisoprene and a butadiene/acrylonitrile copolymer. Polyolefin-based resins are preferred. Among these, ethylene-based resins and propylene-based resins are more preferred, and ethylene-based resins are further preferred.

Examples of the ethylene/α-olefin copolymer include an ethylene-propylene copolymer, an ethylene-butene-1 copolymer, an ethylene-4-methylpentene-1 copolymer, an ethylene-hexene-1 copolymer, an ethylene-octene copolymer, and an ethylene-decene-1 copolymer. Polyethylene-based resins such as a polyethylene and an ethylene/α-olefin copolymer are classified into a low density polyethylene (LDPE) having a density of 0.914-0.925 (g/cm³), a mid-density polyethylene (MDPE) having a density of 0.925-0.94 (g/cm³) or a high density polyethylene (HDPE) having a density of 0.94-0.96 (g/cm³) according to JIS K6760. Among LDPEs, the ethylene/α-olefin copolymer is sometimes referred to as a linear low density polyethylene (LLDPE). The LLDPE is particularly preferred for the thermoplastic polymer in the present specification. The ethylene/a-olefin copolymer preferably contains 50 parts by mass or more of a repeating unit having a polyethylene crystalline structure and derived from ethylene. The α-olefin in the ethylene/α-olefin copolymer is preferably an α-olefin having 4 to 20 carbon atoms. Examples of the α-olefin include butene-1, pentene-1, hexen-1, heptene-1, octene-1, nonene-1, decene-1, dodecene-1, 4-methyl-pentene-1, 4-methyl-hexene-1, vinylcyclohexane, vinylcyclohexene, styrene, norbornene, butadiene, and isoprene. Hexene-1, 4-methyl-pentene-1 and octene-1 are preferred. These α-olefins may be used alone or used in combination of two or more.

A polyethylene-based resin is obtained, for example, by polymerizing ethylene and an α-olefin having 3 to 18 carbon atoms in the presence of a catalyst such as a metallocene-based catalyst or a Ziegler-Natta catalyst. Examples of the polymerization method include a slurry polymerization method carried out in a solvent such as a hydrocarbon solvent, a solvent polymerization method, a liquid-phase polymerization method carried out with no solvent, a gas-phase polymerization method, a liquid phase-gas phase polymerization method in which these methods are carried out continuously.

A propylene-based resin in the present specification means a polyolefin-based resin having structural units derived from propylene. Examples of the propylene-based resin include a crystalline propylene homopolymer, a propylene-ethylene random copolymer, a propylene-α-olefin random copolymer, a propylene-ethylene α-olefin copolymer, and a polypropylene-based block copolymer. A crystalline propylene homopolymer and a polypropylene-based block copolymer are preferred, and a polypropylene-based block copolymer is more preferred.

Examples of the polypropylene-based block copolymer include a polypropylene-based block copolymer comprising a copolymer component consisting of propylene and at least one selected from the group consisting of ethylene and α-olefin, and a propylene homopolymer or a copolymer component consisting mainly of propylene.

The propylene-based resins used for the thermoplastic polymer may be alone or in combination of two or more.

The α-olefin which the propylene-based resin contains is usually an α-olefin having 4 to 12 carbon atoms. Examples of the α-olefin include 1-butene, 1-pentene, 1-hexene, 4-methyl-1-pentene, 1-octene, and 1-decene. 1-butene, 1-hexene and 1-octene are preferred.

Examples of the propylene-α-olefin random copolymer include a propylene-1-butene random copolymer, a propylene-1-hexene random copolymer, and a propylene-1-octene random copolymer.

Examples of the propylene-ethylene-α-olefin copolymer include a propylene-ethylene-1-butene copolymer, a propylene-ethylene-1-hexene copolymer, and a propylene-ethylene-1-octene copolymer.

Examples of the copolymer component mainly consisting of propylene in the polypropylene-based block copolymer comprising a copolymer component consisting of propylene and at least one selected from the group consisting of ethylene and α-olefin, and a propylene homopolymer or a copolymer component consisting mainly of propylene include a propylene-ethylene copolymer component, a propylene-1-butene copolymer component, and a propylene-1-hexene copolymer component. Examples of the copolymer component consisting of propylene and at least one selected from the group consisting of ethylene and α-olefin include a propylene-ethylene copolymer component, a propylene-ethylene-1-butene copolymer component, a propylene-ethylene-1-hexene copolymer component, a propylene-ethylene-1-octene copolymer component, a propylene-1-butene copolymer component, a propylene-1-hexene copolymer component, and a propylene-1-octene copolymer component. The content of a component derived from ethylene and α-olefin in the component consisting of propylene and at least one selected from the group consisting of ethylene and α-olefin is usually 0.01 to 20% by mass.

Examples of the polypropylene-based block copolymer comprising a copolymer component consisting of propylene and at least one selected from the group consisting of ethylene and α-olefin, and a propylene homopolymer or a copolymer component consisting mainly of propylene include a propylene-ethylene block copolymer, a (propylene)-(propylene-ethylene) block copolymer, a (propylene)-(propylene-ethylene-1-butene) block copolymer, a (propylene)-(propylene-ethylene-1-hexene) block copolymer, a (propylene)-(propylene-1-butene) block copolymer, a (propylene)-(propylene-1-hexene) block copolymer, a (propylene-ethylene)-(propylene-ethylene-1-butene) block copolymer, a (propylene-ethylene)-(propylene-ethylene-1-hexaene) block copolymer, a (propylene-ethylene)-(propylene-1-butene) block copolymer, a (propylene-ethylene)-(propylene-1-hexene) block copolymer, a (propylene-1-butene)-(propylene-ethylene) block copolymer, a (propylene-1-butene)-(propylene-ethylene-1-butene) block copolymer, a (propylene-1-butene)-(propylene-ethylene-1-hexene) block copolymer, a (propylene-1-butene)-(propylene-1-butene) block copolymer, and a (propylene-1-butene)-(propylene-1-hexene) block copolymer.

Examples of the production method for the propylene-based resin include a slurry polymerization method carried out in a solvent such as a hydrocarbon solvent, a solvent polymerization method, a liquid-phase polymerization method carried out with no solvent, a gas-phase polymerization method, and a liquid phase-gas phase polymerization method in which these methods are carried out continuously. These production methods may be a batch process or a continuous process. They may be a method of producing at a single step or a method of producing at a multiple-step of two or more steps. The polypropylene-based block copolymer is produced, for example, by a multiple-step production method in which each constituent components are individually produced.

A thermoplastic polymer in the present specification preferably has a melt index (MI) value of 0.01 to 100 g/10 minutes, and preferably 0.01 to 10 g/10 minutes.

An ethylene-based resin preferably has a melt index of 0.01 or more and less than 10 g/10 minutes.

A propylene-based resin preferably has a melt index of 0.01 to 100 g/10 minutes, from the viewpoint of processing moldability.

Examples of methods for obtaining a thermoplastic polymer composition by mixing the processing stabilizer of the present invention and a thermoplastic polymer include a method in which the thermoplastic polymer and the processing stabilizer of the present invention are dry blended, followed by melt-extrusion by an extruder, a method in which a solution obtained by dissolving the processing stabilizer of the present invention in a solvent is mixed with the thermoplastic polymer, followed by removing the solvent, and a method in which a solution obtained by dissolving the processing stabilizer of the present invention in a solvent and a solution obtained by dissolving the thermoplastic polymer in the solvent are mixed, followed by removing the solvent. Examples of the solvent include cyclohexane and the like. It is preferred to use a thermoplastic polymer solution after solution polymerization without any change as the solution in which the thermoplastic polymer is dissolved in the solvent.

The content of the processing stabilizer is preferably 0.005 to 5 parts by mass, more preferably 0.01 to 5 parts by mass, further preferably 0.01 to 1 part by mass, and particularly preferably 0.03 to 1 part by mass, with respect to 100 parts by mass of the thermoplastic polymer in the thermoplastic polymer composition.

The processing stability can be evaluated by measuring the melt index (MI) value of the molded thermoplastic polymer composition obtained by kneading the thermoplastic polymer composition and molding it in a pellet form or the like, by means of a melt indexer.

Specifically, the processing stability can be evaluated, for example, by the following method.

The thermoplastic polymer and the processing stabilizer are dry blended. The resultant thermoplastic polymer composition is kneaded using a 30 mm diameter double screw extrusion molding machine under an atmosphere of air, at 190°C and a screw rotation number of 50 rpm to obtain pellets (1). The obtained pellets (1) are kneaded using a 30 mm diameter single screw extrusion molding machine under an atmosphere of air, at 230°C and a screw rotation number of 50 rpm to obtain pellets. Kneading and extrusion molding using this single screw extrusion molding machine are repeated 5 times to obtain pellets (2). With regard to the obtained pellets (2), according to the method defined in JIS K-7210-1995, MI values are measured at 190°C using a load of 21.18 N (2.16 kg). In the polyethylene-based resin, the higher the MI value, the higher the processing stability. On the other hand, in the polypropylene-based resin, the lower the MI value, the higher the processing stability.

In particular, the polyethylene-based resin with small changes in MI value when molding was repeatedly performed five times at a temperature of 200°C or more using the extrusion molding machine has high processing stability.

### [Examples]

The present invention will hereinafter be described in more detail. Parts and % are based on mass unless otherwise particularly stated.

Specifically, the following compounds were respectively used in Examples and Comparative Examples.
- Thermoplastic polymer (A):
   Low density polyethylene resin (LLDPE) (MI value: 1.05 g/10 minutes, manufactured by SUMITOMO CHEMICAL COMPANY, LIMITED)
- Compound (I)-A:
   2,4,8,10-tetra-t-butyl-6-[3-(3-methyl-4-hydroxy-5-t-butylphenyl)propoxy]dibenzo[d,f][1,3,2]dioxaphosphepin (SUMILIZER (registered trademark) GP manufactured by SUMITOMO CHEMICAL COMPANY, LIMITED)
- Compound (II)-A:
   6-oxo-2,4,8,10-tetra-t-butyl-dibenzo[d,f][1,3,2]dioxaphosphepin

### Production of compound (II)-A

Sixty grams of 2,2'-bis(4,6-di-t-butylphenol) and 770 mL of n-pentane were mixed. To the mixture, 23 g of phosphorous trichloride was added dropwise, and 49 g of triethylamine was further added dropwise thereto while cooling the mixture in an ice bath, and then the mixture was stirred at room temperature for 6 hours. To the resultant mixture, 2.6 g of water was added followed by stirring at room temperature for 2 hours. To the resultant mixture, water and ethyl acetate were added, and an ethyl acetate layer was separated. The resultant ethyl acetate layer was washed with saturated saline. The washed ethyl acetate layer was dried with anhydrous magnesium sulfate, and ethyl acetate was distilled off to obtain a solid product. The obtained solid product and diethyl ether were mixed, and then the mixture was filtered to obtain a white solid product. The obtained white solid product was dissolved in a hexane/ethyl acetate mixture followed by filtration. Hexane and ethyl acetate were distilled off from the filtrate to obtain a compound (II)-A. The yield was 61.8%.

It was confirmed, by mass spectrometry and ¹H-NMR, that the obtained compound (II)-A was 6-oxo-2,4,8,10-tetra-t-butyl-dibenzo[d,f][1,3,2]dioxaphosphepin.

### (Example 1)

A compound (I)-A, and a compound (II)-A were mixed at a ratio shown in Table 1 to obtain a processing stabilizer (A). Liquid chromatography measurement was performed on the processing stabilizer (A) under the following measurement conditions. The area of the compound (II)-A given that the area of the compound (I)-A is 100 is shown in Table 1.

### Liquid chromatography (LC) measurement conditions

LC measuring device: Shimadzu Corporation LC-10Avp
Column: Sumipax ODS A-212 (6 mm ϕ X 150 mm, diameter of filler: 5 µm)
Column temperature: 40°C
Mobile phase:
   (Liquid A) 0.1 mass% of ammonium acetate/water
   (Liquid B) 0.1 mass% of ammonium acetate/methanol
Mobile phase gradient: 0→20 minutes (Liquid A: 20→0 mass% (1 mass%/minute), Liquid B: 80→100 mass% (1 mass%/minute)), 20→45 minutes (Liquid A: 0 mass%, Liquid B: 100 mass%)
Flow rate: 1.0 mL/minute
Detector: SPD-10Avp
Detection method: UV (280 nm)
Sample concentration: 5 mg/mL
Injection amount: 10 µL

One hundred parts by mass of a thermoplastic polymer (A), 0.1 parts of a processing stabilizer (A), and 0.05 parts by mass of calcium stearate were dry blended, and then further kneaded using a 30 mm diameter twin-screw extrusion molding machine (NAS30 type extruder, manufactured by Nakatani Co., Ltd.) under an atmosphere of air, at 190°C and a screw rotation number of 50 rpm to obtain pellets (1) as a thermoplastic polymer composition. The obtained pellets (1) were kneaded using a 30 mm diameter single screw extrusion molding machine (VS30-28 type extruder, manufactured by TANABE PLASTICS MACHINERY CO., LTD.) under an atmosphere of air, at 230°C and a screw rotation number of 50 rpm to obtain pellets. Kneading and extrusion molding using this single screw extrusion machine were repeated 5 times to obtain pellets (2). MI values of the obtained pellets (2) were measured with a melt indexer (manufactured by TECHNO SEVEN CO., LTD., type L246-3537) to evaluate the processing stability. The results are shown in Table 1. It can be said that the higher the MI value, the higher the processing stability of the polyethylene resin.

### (Examples 2-6, Comparative Examples 1-5)

The area and processing stability were evaluated in the same manner as in Example 1, except that the numbers of parts in Table 1 were used for the compound (I)-A and the compound (II)-A. The results are shown in Table 1.

**[Table 1]**

| | Processing stabilizer Mixing ratio | | | | Processing stability MI value | |
|---|---|---|---|---|---|---|
| | Parts by mass¹⁾ | | Area²⁾ | | | |
| | Compound (I)-A | Compound (II)-A | Compound (I)-A | Compound (II)-A | Measured value (g/10 min.) | Relative value with Comp. Ex. 1 being 100 |
| Example 1 | 95 | 5 | 100 | 3.10 | 0.43 | 110 |
| Example 2 | 98 | 2 | 100 | 1.22 | 0.44 | 113 |
| Example 3 | 99.5 | 0.5 | 100 | 0.38 | 0.44 | 113 |
| Example 4 | 99.9 | 0.1 | 100 | 0.09 | 0.44 | 113 |
| Example 5 | 99.95 | 0.05 | 100 | 0.07 | 0.44 | 113 |
| Example 6 | 99.99 | 0.01 | 100 | 0.04 | 0.42 | 108 |
| Comp. Example 1 | 100 | 0 | 100 | 0 | 0.39 | 100 |
| Comp. Example 2 | 0 | 100 | - | - | 0.25 | 64 |
| Comp. Example 3 | 50 | 50 | 100 | 14.9 | 0.34 | 87 |
| Comp. Example 4 | 80 | 20 | 100 | 73.6 | 0.39 | 100 |
| Comp. Example 5 | 0 | 0 | - | - | 0.11 | 28 |

| | | | | | | |
|---|---|---|---|---|---|---|
| 1) Given that the total amount of compound (I)-A and compound (II)-A is 100. 2) Calculated given that the area of compound (I)-A is 100. | | | | | | |

### Industrial Applicability

The processing stabilizer of the present invention is useful for improving the processing stability of resins.

## Claims

1. A processing stabilizer comprising a compound represented by formula (I): 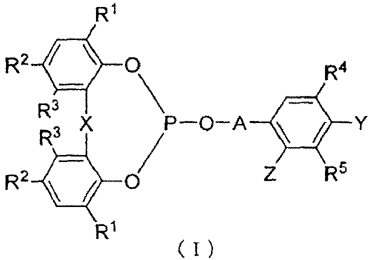 wherein R¹, R², R⁴ and R⁵ each independently represent a hydrogen atom, an alkyl group having 1 to 8 carbon atoms, a cycloalkyl group having 5 to 8 carbon atoms, an alkylcycloalkyl group having 6 to 12 carbon atoms, an aralkyl group having 7 to 12 carbon atoms or a phenyl group; R³ represents a hydrogen atom or an alkyl group having 1 to 8 carbon atoms; X represents a single bond, a sulfur atom or a >CH-R⁶ group (R⁶ represents a hydrogen atom, an alkyl group having 1 to 8 carbon atoms or a cycloalkyl group having 5 to 8 carbon atoms); A represents an alkylene group having 1 to 8 carbon atoms or a *-C(=O)-R⁷- group (R⁷ represents a single bond or an alkylene group having 1 to 8 carbon atoms, and * represents a bond on the side of oxygen); one of Y and Z represents a hydroxyl group, an alkoxy group having 1 to 8 carbon atoms or an aralkyloxy group having 7 to 12 carbon atoms, and the other represents a hydrogen atom or an alkyl group having 1 to 8 carbon atoms,
and a compound represented by formula (II): 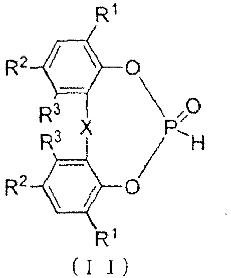
wherein R¹ and R² each independently represent a hydrogen atom, an alkyl group having 1 to 8 carbon atoms, a cycloalkyl group having 5 to 8 carbon atoms, an alkylcycloalkyl group having 6 to 12 carbon atoms, an aralkyl group having 7 to 12 carbon atoms or a phenyl group; R³ represents a hydrogen atom or an alkyl group having 1 to 8 carbon atoms; X represents a single bond, a sulfur atom or a >CH-R⁶ group (R⁶ represents a hydrogen atom, an alkyl group having 1 to 8 atoms or a cycloalkyl group having 5 to 8 carbon atoms),
wherein the content of the compound represented by formula (II) is 0.005 to 10 parts by mass with respect to 100 parts by mass of the compound represented by formula (I).

2. A processing stabilizer comprising a compound represented by formula (I): 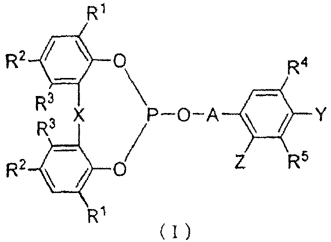 wherein R¹, R², R⁴ and R⁵ each independently represent a hydrogen atom, an alkyl group having 1 to 8 carbon atoms, a cycloalkyl group having 5 to 8 carbon atoms, an alkylcycloalkyl group having 6 to 12 carbon atoms, an aralkyl group having 7 to 12 carbon atoms or a phenyl group; R³ represents a hydrogen atom or an alkyl group having 1 to 8 carbon atoms; X represents a single bond, a sulfur atom or a >CH-R⁶ group (R⁶ represents a hydrogen atom, an alkyl group having 1 to 8 carbon atoms or a cycloalkyl group having 5 to 8 carbon atoms); A represents an alkylene group having 1 to 8 carbon atoms or a *-C(=O)-R⁷- group (R⁷ represents a single bond or an alkylene group having 1 to 8 carbon atoms, and * represents a bond on the side of oxygen); one of Y and Z represents a hydroxyl group, an alkoxy group having 1 to 8 carbon atoms or an aralkyloxy group having 7 to 12 carbon atoms, and the other represents a hydrogen atom or an alkyl group having 1 to 8 carbon atoms, and a compound represented by formula (II): 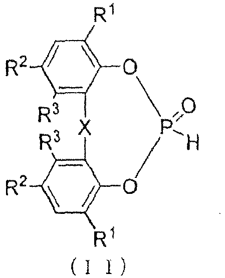
wherein R¹ and R² each independently represent a hydrogen atom, an alkyl group having 1 to 8 carbon atoms, a cycloalkyl group having 5 to 8 carbon atoms, an alkylcycloalkyl group having 6 to 12 carbon atoms, an aralkyl group having 7 to 12 carbon atoms or a phenyl group; R³ represents a hydrogen atom or an alkyl group having 1 to 8 carbon atoms; X represents a single bond, a sulfur atom or a >CH-R⁶ group (R⁶ represents a hydrogen atom, an alkyl group having 1 to 8 carbon atoms or a cycloalkyl group having 5 to 8 carbon atoms),
wherein the area of the compound represented by formula (II) is 0.01 to 5 given that the area of the compound represented by formula (I) is 100 in liquid chromatography measurement under the following conditions:
Measurement conditions
Column: Sumipax ODS A-212 (6 mm ϕ X 150 mm, diameter of filler: 5 µm)
Column temperature: 40°C
Mobile phase:
(Liquid A) 0.1 mass% of ammonium acetate/water
(Liquid B) 0.1 mass% of ammonium acetate/methanol
Mobile phase gradient: 0→20 minutes (Liquid A: 20→0 mass% (1 mass%/minute), Liquid B: 80→100 mass% (1 mass%/minute)), 20→45 minutes (Liquid A: 0 mass%, Liquid B: 100 mass%)
Flow rate: 1.0 mL/minute
Detection method: UV (280 nm)
Sample concentration: 5 mg/mL
Injection amount: 10 µL.

3. The processing stabilizer according to claim 1 or 2, wherein the total amount of the compound represented by formula (I) and the compound represented by formula (II) is 90 parts by mass or more with respect to 100 parts by mass of the processing stabilizer.

4. A thermoplastic polymer composition comprising the processing stabilizer according to any one of claims 1 to 3, and a thermoplastic polymer.

5. The thermoplastic polymer composition according to claim 4, wherein the content of the processing stabilizer according to any one of claims 1 to 3 is 0.005 to 5 parts by mass with respect to 100 parts by weight of the thermoplastic polymer.

6. The thermoplastic polymer composition according to claim 4 or 5, wherein the thermoplastic polymer is a polyolefin.

7. Use of the processing stabilizer according to any one of claims 1 to 3 for improving processing stability of thermoplastic polymers.

## Patentansprüche

1. Ein Verarbeitungsstabilisator, umfassend eine Verbindung, dargestellt durch Formel (I): 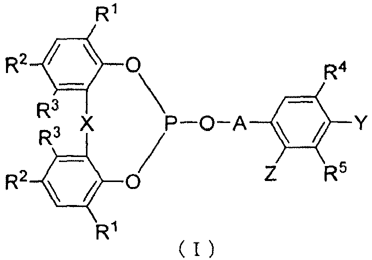 wobei R¹, R², R⁴ und R³ jeweils unabhängig ein Wasserstoffatom, einen Alkylrest mit 1 bis 8 Kohlenstoffatomen, einen Cycloalkylrest mit 5 bis 8 Kohlenstoffatomen, einen Alkylcycloalkylrest mit 6 bis 12 Kohlenstoffatomen, einen Aralkylrest mit 7 bis 12 Kohlenstoffatomen oder einen Phenylrest bedeuten; R³ ein Wasserstoffatom oder einen Alkylrest mit 1 bis 8 Kohlenstoffatomen bedeutet; X eine Einfachbindung, ein Schwefelatom oder einen Rest >CH-R⁶ bedeutet (R⁶ bedeutet ein Wasserstoffatom, einen Alkylrest mit 1 bis 8 Kohlenstoffatomen oder einen Cycloalkylrest mit 5 bis 8 Kohlenstoffatomen); A einen Alkylenrest mit 1 bis 8 Kohlenstoffatomen oder einen Rest *-C(=O)-R⁷- bedeutet (R⁷ bedeutet eine Einfachbindung oder einen Alkylenrest mit 1 bis 8 Kohlenstoffatomen und * bedeutet eine Bindung an der Sauerstoffseite); eines von Y und Z einen Hydroxylrest, einen Alkoxyrest mit 1 bis 8 Kohlenstoffatomen oder einen Aralkyloxyrest mit 7 bis 12 Kohlenstoffatomen bedeutet und das andere ein Wasserstoffatom oder einen Alkylrest mit 1 bis 8 Kohlenstoffatomen bedeutet,
und eine Verbindung, dargestellt durch Formel (II): 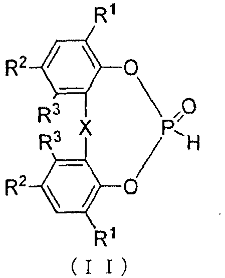
wobei R¹ und R² jeweils unabhängig ein Wasserstoffatom, einen Alkylrest mit 1 bis 8 Kohlenstoffatomen, einen Cycloalkylrest mit 5 bis 8 Kohlenstoffatomen, einen Alkylcycloalkylrest mit 6 bis 12 Kohlenstoffatomen, einen Aralkylrest mit 7 bis 12 Kohlenstoffatomen oder einen Phenylrest bedeuten; R³ ein Wasserstoffatom oder einen Alkylrest mit 1 bis 8 Kohlenstoffatomen bedeutet; X eine Einfachbindung, ein Schwefelatom oder einen Rest >CH-R⁶ bedeutet (R⁶ bedeutet ein Wasserstoffatom, einen Alkylrest mit 1 bis 8 Kohlenstoffatomen oder einen Cycloalkylrest mit 5 bis 8 Kohlenstoffatomen),
wobei der Gehalt der durch Formel (II) dargestellten Verbindung 0,005 bis 10 Massenteile, bezogen auf 100 Massenteile der durch Formel (I) dargestellten Verbindung, beträgt.

2. Ein Verarbeitungsstabilisator, umfassend eine Verbindung, dargestellt durch Formel (I): 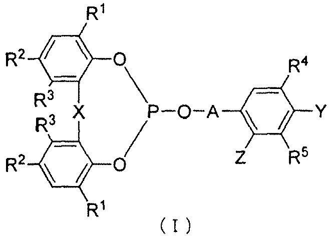 wobei R¹, R², R⁴ und R⁵ jeweils unabhängig ein Wasserstoffatom, einen Alkylrest mit 1 bis 8 Kohlenstoffatomen, einen Cycloalkylrest mit 5 bis 8 Kohlenstoffatomen, einen Alkylcycloalkylrest mit 6 bis 12 Kohlenstoffatomen, einen Aralkylrest mit 7 bis 12 Kohlenstoffatomen oder einen Phenylrest bedeuten; R³ ein Wasserstoffatom oder einen Alkylrest mit 1 bis 8 Kohlenstoffatomen bedeutet; X eine Einfachbindung, ein Schwefelatom oder einen Rest >CH-R⁶ bedeutet (R⁶ bedeutet ein Wasserstoffatom, einen Alkylrest mit 1 bis 8 Kohlenstoffatomen oder einen Cycloalkylrest mit 5 bis 8 Kohlenstoffatomen); A einen Alkylenrest mit 1 bis 8 Kohlenstoffatomen oder einen Rest *-C(=O)-R⁷- bedeutet (R⁷ bedeutet eine Einfachbindung oder einen Alkylenrest mit 1 bis 8 Kohlenstoffatomen und * bedeutet eine Bindung an der Sauerstoffseite); eines von Y und Z einen Hydroxylrest, einen Alkoxyrest mit 1 bis 8 Kohlenstoffatomen oder einen Aralkyloxyrest mit 7 bis 12 Kohlenstoffatomen bedeutet und das andere ein Wasserstoffatom oder einen Alkylrest mit 1 bis 8 Kohlenstoffatomen bedeutet,
und eine Verbindung, dargestellt durch Formel (II): 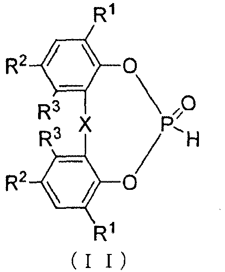
wobei R¹ und R² jeweils unabhängig ein Wasserstoffatom, einen Alkylrest mit 1 bis 8 Kohlenstoffatomen, einen Cycloalkylrest mit 5 bis 8 Kohlenstoffatomen, einen Alkylcycloalkylrest mit 6 bis 12 Kohlenstoffatomen, einen Aralkylrest mit 7 bis 12 Kohlenstoffatomen oder einen Phenylrest bedeuten; R³ ein Wasserstoffatom oder einen Alkylrest mit 1 bis 8 Kohlenstoffatomen bedeutet; X eine Einfachbindung, ein Schwefelatom oder einen Rest >CH-R⁶ bedeutet (R⁶ bedeutet ein Wasserstoffatom, einen Alkylrest mit 1 bis 8 Kohlenstoffatomen oder einen Cycloalkylrest mit 5 bis 8 Kohlenstoffatomen),
wobei die Fläche der durch Formel (II) dargestellten Verbindung bei der Flüssigchromatografie-Messung unter den folgenden Bedingungen 0,01 bis 5 beträgt, mit der Maßgabe, dass die Fläche der durch Formel (I) dargestellten Verbindung 100 beträgt: Messbedingungen
Säule: Sumipax ODS A-212 (6 mm ϕ x 150 mm, Durchmesser des Füllstoffes: 5 µm) Säulentemperatur: 40°C
Mobile Phase:
(Flüssigkeit A) 0,1 Massen-% Ammoniumacetat/Wasser
(Flüssigkeit B) 0,1 Massen-% Ammoniumacetat/Methanol
Gradient der mobilen Phase: 0→20 Minuten (Flüssigkeit A: 20→0 Massen-% (1 Massen-%/Minute), Flüssigkeit B: 80→100 Massen-% (1 Massen-%/Minute)), 20→45 Minuten (Flüssigkeit A: 0 Massen-%, Flüssigkeit B: 100 Massen-%) Strömungsrate: 1,0 ml/Minute
Nachweisverfahren: UV (280 nm)
Probenkonzentration: 5 mg/ml
Einspritzmenge: 10 µl.

3. Der Verarbeitungsstabilisator nach Anspruch 1 oder 2, wobei die Gesamtmenge der durch Formel (I) dargestellten Verbindung und der durch Formel (II) dargestellten Verbindung 90 Massenteile oder mehr, bezogen auf 100 Massenteile des Verarbeitungsstabilisators, beträgt.

4. Eine thermoplastische Polymerzusammensetzung, umfassend den Verarbeitungsstabilisator nach einem der Ansprüche 1 bis 3 und ein thermoplastisches Polymer.

5. Die thermoplastische Polymerzusammensetzung nach Anspruch 4, wobei der Gehalt des Verarbeitungsstabilisators nach einem der Ansprüche 1 bis 3 0,005 bis 5 Massenteile, bezogen auf 100 Gewichtsteile des thermoplastischen Polymers, beträgt.

6. Die thermoplastische Polymerzusammensetzung nach Anspruch 4 oder 5, wobei das thermoplastische Polymer ein Polyolefin ist.

7. Verwendung des Verarbeitungsstabilisators nach einem der Ansprüche 1 bis 3 zur Verbesserung der Verarbeitungsstabilität thermoplastischer Polymere.

## Revendications

1. Agent stabilisant de traitement comprenant un composé représenté par la formule (I) : 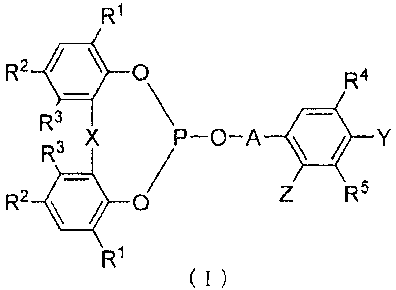 dans laquelle chacun de R¹, R², R⁴ et R⁵ représente indépendamment un atome d'hydrogène, un groupe alkyle ayant 1 à 8 atomes de carbone, un groupe cycloalkyle ayant 5 à 8 atomes de carbone, un groupe alkylcycloalkyle ayant 6 à 12 atomes de carbone, un groupe aralkyle ayant 7 à 12 atomes de carbone ou un groupe phényle ; R³ représente un atome d'hydrogène ou un groupe alkyle ayant 1 à 8 atomes de carbone ; X représente une liaison simple, un atome de soufre ou un groupe >CH-R⁶ (où R⁶ représente un atome d'hydrogène, un groupe alkyle ayant 1 à 8 atomes de carbone ou un groupe cycloalkyle ayant 5 à 8 atomes de carbone) ; A représente un groupe alkylène ayant 1 à 8 atomes de carbone ou un groupe *-C(=O)-R⁷ (où R⁷ représente une liaison simple ou un groupe alkylène ayant 1 à 8 atomes de carbone, et * représente une liaison du côté de l'oxygène) ; l'un de Y et Z représente un groupe hydroxyle, un groupe alcoxy ayant 1 à 8 atomes de carbone ou un groupe aralkyloxy ayant 7 à 12 atomes de carbone, et l'autre représente un atome d'hydrogène ou un groupe alkyle ayant 1 à 8 atomes de carbone,
et un composé représenté par la formule (II) : 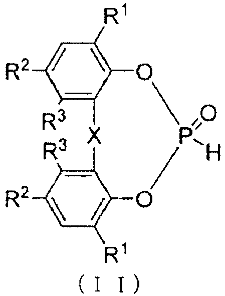
dans laquelle chacun de R¹ et R² représente indépendamment un atome d'hydrogène, un groupe alkyle ayant 1 à 8 atomes de carbone, un groupe cycloalkyle ayant 5 à 8 atomes de carbone, un groupe alkylcycloalkyle ayant 6 à 12 atomes de carbone, un groupe aralkyle ayant 7 à 12 atomes de carbone ou un groupe phényle ; R³ représente un atome d'hydrogène ou un groupe alkyle ayant 1 à 8 atomes de carbone ; X représente une liaison simple, un atome de soufre ou un groupe >CH-R⁶ (où R⁶ représente un atome d'hydrogène, un groupe alkyle ayant 1 à 8 atomes de carbone ou un groupe cycloalkyle ayant 5 à 8 atomes de carbone),
dans lequel la teneur en le composé représenté par la formule (II) est de 0,005 à 10 parties en masse pour 100 parties en masse du composé représenté par la formule (I).

2. Agent stabilisant de traitement comprenant un composé représenté par la formule (I) : 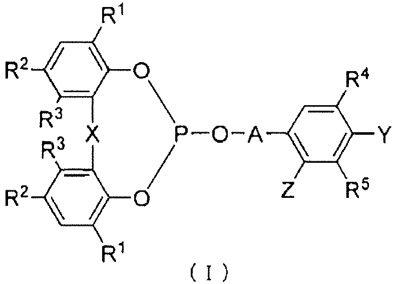 dans laquelle chacun de R¹, R², R⁴ et R⁵ représente indépendamment un atome d'hydrogène, un groupe alkyle ayant 1 à 8 atomes de carbone, un groupe cycloalkyle ayant 5 à 8 atomes de carbone, un groupe alkylcycloalkyle ayant 6 à 12 atomes de carbone, un groupe aralkyle ayant 7 à 12 atomes de carbone ou un groupe phényle ; R³ représente un atome d'hydrogène ou un groupe alkyle ayant 1 à 8 atomes de carbone ; X représente une liaison simple, un atome de soufre ou un groupe >CH-R⁶ (où R⁶ représente un atome d'hydrogène, un groupe alkyle ayant 1 à 8 atomes de carbone ou un groupe cycloalkyle ayant 5 à 8 atomes de carbone) ; A représente un groupe alkylène ayant 1 à 8 atomes de carbone ou un groupe *-C(=O)-R⁷ (où R⁷ représente une liaison simple ou un groupe alkylène ayant 1 à 8 atomes de carbone, et * représente une liaison du côté de l'oxygène) ; l'un de Y et Z représente un groupe hydroxyle, un groupe alcoxy ayant 1 à 8 atomes de carbone ou un groupe aralkyloxy ayant 7 à 12 atomes de carbone, et l'autre représente un atome d'hydrogène ou un groupe alkyle ayant 1 à 8 atomes de carbone,
et un composé représenté par la formule (II) : 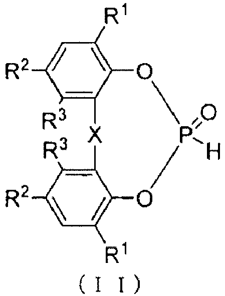
dans laquelle chacun de R¹ et R² représente indépendamment un atome d'hydrogène, un groupe alkyle ayant 1 à 8 atomes de carbone, un groupe cycloalkyle ayant 5 à 8 atomes de carbone, un groupe alkylcycloalkyle ayant 6 à 12 atomes de carbone, un groupe aralkyle ayant 7 à 12 atomes de carbone ou un groupe phényle ; R³ représente un atome d'hydrogène ou un groupe alkyle ayant 1 à 8 atomes de carbone ; X représente une liaison simple, un atome de soufre ou un groupe >CH-R⁶ (où R⁶ représente un atome d'hydrogène, un groupe alkyle ayant 1 à 8 atomes de carbone ou un groupe cycloalkyle ayant 5 à 8 atomes de carbone),
dans lequel la superficie du composé représenté par la formule (II) est de 0,01 à 5, étant établi que la superficie du composé représenté par la formule (I) est de 100 dans une mesure de chromatographie liquide dans les conditions suivantes :
conditions de mesure
colonne : Sumipax ODS A-212 (6 mm ϕ × 150 mm, diamètre de la charge : 5 µm)
température de colonne : 40°C
phase mobile :
(liquide A) 0,1 % en masse d'acétate d'ammonium/eau
(liquide B) 0,1 % en masse d'acétate d'ammonium/méthanol
gradient de phase mobile : 0 → 20 minutes (liquide A : 20 → 0 % en masse (1 % en masse par minute), liquide B : 80 → 100 % en masse (1 % en masse par minute)), 20 → 45 minutes (liquide A : 0 % en masse, liquide B : 100 % en masse)
débit : 1,0 ml/minute
procédé de détection : UV (280 nm)
concentration d'échantillon : 5 mg/ml
quantité d'injection : 10 µl.

3. Agent stabilisant de traitement selon la revendication 1 ou 2, dans lequel la quantité totale du composé représenté par la formule (I) et du composé représenté par la formule (II) est de 90 parties en masse ou plus pour 100 parties en masse de l'agent stabilisant de traitement.

4. Composition de polymère thermoplastique comprenant l'agent stabilisant de traitement selon l'une quelconque des revendications 1 à 3, et un polymère thermoplastique.

5. Composition de polymère thermoplastique selon la revendication 4, dans laquelle la teneur en l'agent stabilisant de traitement selon l'une quelconque des revendications 1 à 3 est de 0,005 à 5 parties en masse pour 100 parties en poids du polymère thermoplastique.

6. Composition de polymère thermoplastique selon la revendication 4 ou 5, dans laquelle le polymère thermoplastique est une polyoléfine.

7. Utilisation de l'agent stabilisant de traitement selon l'une quelconque des revendications 1 à 3 pour améliorer la stabilité à un traitement de polymères thermoplastiques.
